Europäisches Patentamt

European Patent Office

Office européen des brevets

(19)

(11) Publication number: **0 336 603**

**A2**

(12) **EUROPEAN PATENT APPLICATION**

(21) Application number: **89302859.7**

(22) Date of filing: **22.03.89**

(51) Int. Cl.⁴: **G01J 4/00 , G02B 5/30**

(30) Priority: **06.04.88 GB 8807988**

(43) Date of publication of application:
**11.10.89 Bulletin 89/41**

(84) Designated Contracting States:
**AT BE CH DE FR GB IT LI NL SE**

(71) Applicant: **BRITISH AEROSPACE PUBLIC LIMITED COMPANY**
**11 Strand**
**London WC2N 5JT(GB)**

(72) Inventor: **Lawrence, Martin**
**Highlands Church Street Wetheringset**
**Stowmarket Suffolk(GB)**
Inventor: **Duffy, Christopher James**
**British Aerospace Sowerby Research Centre**
**PO Box 5**
**Filton Bristol BS12 7QW(GB)**

(74) Representative: **Rooney, Paul Blaise et al**
**British Aerospace plc Corporate Patents**
**Department Brooklands Road**
**Weybridge Surrey KT13 0SJ(GB)**

(54) **A detector for detecting polarised radiation.**

(57) A detector for detecting polarised radiation (24) comprising means (10, 18, 20) for modulating the polarisation of incoming radiation as a function of time which modulating means (10, 18, 20) has one or more opaque regions (19, 22), means (14) for detecting said modulated radiation, means (17) for deriving a reference signal indicative of the frequency of modulation applied to the modulating means (10, 18, 20), which reference signal is derived as a result of said one or more opaque regions (19, 22) on the modulating means (10, 18, 20), and means for ensuring that the reference signal and the resultant polarisation signal are in phase.

Fig.1.

# A DETECTOR FOR DETECTING POLARISED RADIATION

This invention relates to a detector for detecting polarised radiation such as a polarised laser beam.

It has been proposed to use spectral filters to detect laser radiation. This technique is somewhat limited in that only a few wavebands are detectable using this method. Other proposals making use of polarisation properties are relatively complex in that they involve beam splitting and comparisons of the processed component beams.

According to the present invention, there is provided a detector for detecting polarised radiation, characterised by including means for modulating the polarisation of incoming radiation as a function of time, which modulation means has one or more opaque regions, means for detecting said modulated radiation, means for deriving a reference signal characteristic of the modulation applied to the modulating means, which reference signal is derived as a result of said one or more opaque regions on the modulating means, and means for ensuring that the refernce signal and the resultant polarisation signal are in phase.

Preferably said modulating means is movable, and, in the embodiments to be described the modulating means is rotatable. the modulating means may be a polarising filter and may include a full wave plate or half wave plate.

In an embodiment to be described, a polarising filter comprises a plurality of equiangularly space radially extending opaque regions.

The detector may comprise means for ensuring that the frequencies of the reference signal and the resultant polarisation signal are the same.

Reference will now be made, by way of example, to the accompanying drawings in which:-

Figure 1 is a diagram of a detector according to one embodiment of the present invention for detecting plane polarised laser beams;

Figure 2 is a diagram of a first polarising filter for use in a detector of Figure 1 according to the present invention;

Figure 3 is a graph of the output intensity obtained using the polarising filter of Figure 2;

Figure 4 is a diagram of a second polarising filter for use in a detector of Figure 1 acording to the present invention; and

Figure 5 is a graph of te output intensity obtained using the polarising filter of Figure 4.

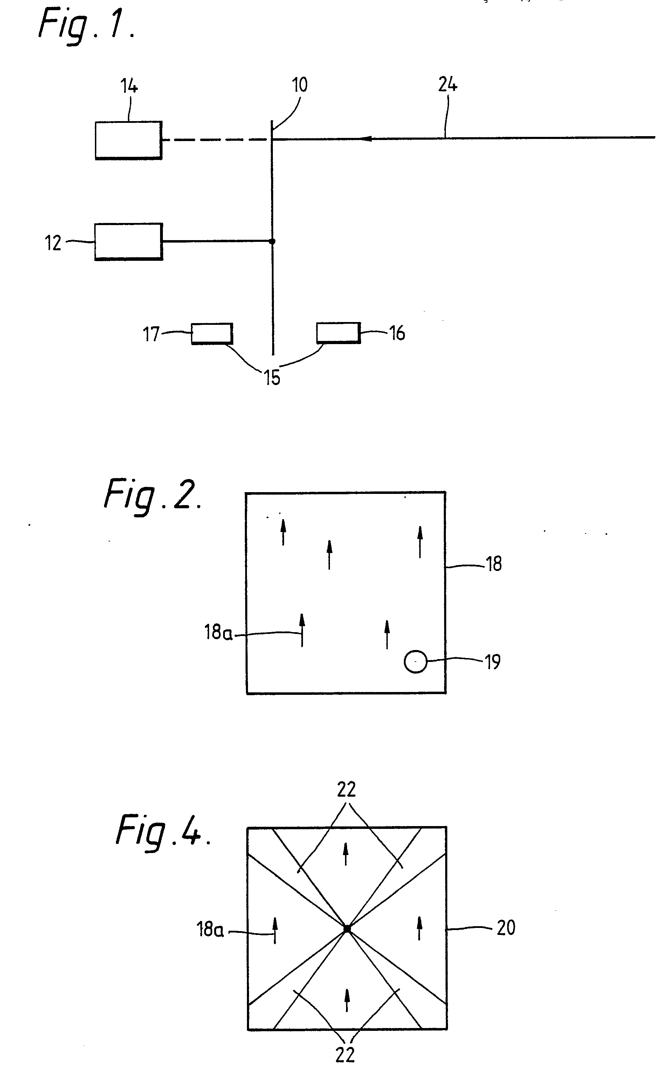

Figure 1 illustrates a detector of the invention for detecting plane polarised laser light 24, including a polarising filter 10 rotated by a motor 12, a phase sensitive detector 14 for detecting the transmission of radiation through the polarising filter 10 and a sensor pair 15 for determining the rate of rotation of the polarisation filter. The sensor pair 15 comprises a light source 16 and photo-detector 17 which sends a signal indicative of the rate of rotation of the filter 10 to a lock-in amplifier (not shown).

the polarising filter 10 can take different forms, two of which are shown in Figures 2 and 4. The first polarising filter 18, is a plan polarising filter with the plane of polarisation being indicated by the arrows (18a). The filter 18 is marked with an opaque region 19 in the path of the sensor pair 15 to allow the rate of rotation to be determined. The second polarising filter 20 is a segmented polarisation filter with four opaque regions 22 superimposed upon a plane polarising filter similar to the first polarising filter.

In use, the polarising, filter, 18 or 20, is placed in position 10 (Figure 1). A plane polarised laser beam is indicated at 24. The polarising filter is rotated about a central axis, perpendicular to the plane of the filter by the motor 12. The strength of the signal which is received at detector 14 depends upon the degree of alignment of the polarisations of the incident radiation 24 and filter 18 or 20.

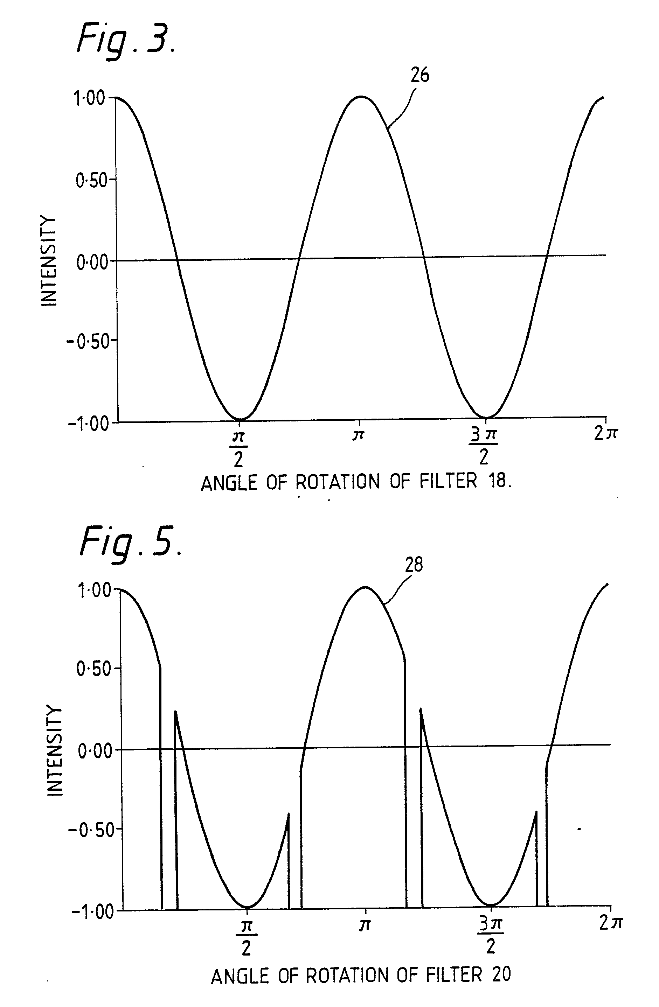

If the polarising filter 18 is in position 10 (Figure 1), maximum transmission of the plane polarised beam 24 will occur twice during each rotation giving rise to an output of the form 26 shown in Figure 3. The transmission of randomly polarised background radiation through the filter 18 will not vary with the rotation of the filter 18. However, if the segmented polarising filter 20 is in position 10 a more complicated signal will result. Randomly polarised radiation will give rise to a signal varying at four times the rate of rotation owing to the opaque regions 22. Transmission of the beam 24 will occur only in the polarising regions 20 and not in the opaque regions 22, with maximum transmission occurring when the direction of polarisation of the beam 24 and the polarising filter 20 are aligned. For one revolution of the polarising filter 20, the signal 28 detected at the detector 14 when a polarised laser beam is present will be of the form shown in Figure 5. The signal 28 can be considered as comprising two signals - a reference signal of frequency w produced by the background radiation and a polarisation signal produced by the polarised flux of frequency w/2, superimposed upon the reference signal.

In order that the phase sensitive detector 14 can detect both the reference and polarisation signals mentioned above, the reference frequency is divided by two by a further electronic stage (not shown). This ensures that the frequency of the reference and polarisation signals are equal, thereby facilitating the use of a phase sensitive detector.

There also exists a random phase difference ($\theta$) between the polarisation and refernce signals. Since the orientation of the polarised flux is unknown the phase difference $\theta$ between the polarisation and reference signals can vary between $\phi$ and $\pi$. The output of the detector 14 is maximum when both signals are in phase, zero when $\phi = \pi/2$ and varies as cos $\phi$ for intermediate values. To obtain maximum output there may be an automatic facility for adjusting the phase ($\theta$) of the reference signal from $\theta$ to $\theta + 90$ and then back to $\theta$ again and to monitor the signal output to determine when the reference and polarisation signals are in phase.

The use of opaque portions 22 in the polarising filter 20 enables detection of low intensity beams more readily than does the simple filter 18.

It should be noted that the number of opaque regions 22 in polarising filter 20 is not limited to four as shown but may be varied to suit requirements.

The shape and size of the or each opaque region may be varied to suit requirements.

As well using a polarising filter 18 or 20 in the sensor, a rotating full wave plate could also be used. A full wave plate rotates the polarisation of radiation of a specific wavelength through $2\pi$. Radiation of other wavelengths will not produce a significant modulated signal. A reference signal indicative of the rate of rotation of the full wave plate can be derived from the motor rotating the plate.

Alternatively to the full wave plate, a rotatable half-wave plate could be used. In this case steps must be taken to ensure that the frequency of the refernce and polarisation signals are the same e.g. by signal processing.

In cases where the background is partially polarised using an additional wavelength specific plate is better then using a simple polarising filter as the background effect would then be minimised.

It should be understood that the present invention is not limited to the detection of polarised beams but is applcable to the detection fo all types of polarised radiation.

It should be further understood that the detector could form part of a thresholding or imaging facility by adding an amplitude dividing beam splitter at the entrance of the sensor (15).

## Claims

1. A detector for detecting polarised radiation, characterised by including means (10,18,20) for modulating the polarisation of incoming radiation (24) as a function of time, which modulating means has one or more opaque regions, (19,22) means for detecting said modulated radiation, (14) means (17) for deriving a reference signal characteristic of the modulation applied to the modulating means (10,18,20) which reference signal is derived as a result of said one or more opaque regions on the modulating means, and means for ensuring that the reference signal and the resultant polarisation signal are in phase.

2. A detector according to Claim 1, wherein said modulating means (10,18,20) is movable.

3. A detector according to Claim 2, wherein said modulating means (10,18,20) is rotatable.

4. A detector according to any one of Claims 1 to 3, wherein the modulating means (10,18,20) is a polarising filter.

5. A detector according to any one of Claims 1 to 3, wherein the modulating means (10,18,20) includes a full wave plate or a half wave plate.

6. A detector according to any one of claims 1 to 5, wherein the modulating means includes a polarising filter (20) having a plurality of equiangularly spaced radially extending opaque regions (22).

7. A detector according to any one of the preceding claims, including means for ensuring that the frequencies of the reference signal and the resultant polarisation signal are the same.

**Fig.1.**

**Fig.2.**

**Fig.4.**

## Fig. 3.

26

1·00

0·50

0·00

-0·50

-1·00

INTENSITY

$\frac{\pi}{2}$     $\pi$     $\frac{3\pi}{2}$     $2\pi$

ANGLE OF ROTATION OF FILTER 18.

## Fig. 5.

28

1·00

0·50

0·00

-0·50

-1·00

INTENSITY

$\frac{\pi}{2}$     $\pi$     $\frac{3\pi}{2}$     $2\pi$

ANGLE OF ROTATION OF FILTER 20